# EUROPÄISCHE PATENTSCHRIFT

(11) **EP 0 718 823 B1**
(45) Veröffentlichungstag und Bekanntmachung des Hinweises auf die Patenterteilung: **20.09.2000**
(21) Anmeldenummer: 95119517.1
(22) Anmeldetag: 11.12.1995
(51) Int. Cl.: G10L 15/24

(54) **Verfahren zur Umwandlung von sprachlich eingegebenen Informationen in maschinenlesbare Daten**
Method for converting speech information into machine readable data
Procédé de conversion d'informations de parole en données lisibles par machine

(30) Priorität: 23.12.1994 DE 4446353
(43) Veröffentlichungstag der Anmeldung: 26.06.1996
(73) Patentinhaber: SIEMENS AKTIENGESELLSCHAFT, 80333 München (DE)
(72) Erfinder: Harke, Ulrike, Dipl.-Ing., D-83727 Schliersee (DE); Mederer, Hans-Gerd, Dipl.-Phys., D-91052 Erlangen (DE)

(56) Entgegenhaltungen:
- EP-A- 0 472 356
- EP-A- 0 618 565
- EP-A- 0 653 701

## Beschreibung

Die Erfindung betrifft ein Verfahren zur Umwandlung von in ein Steuer- und Informationssystem einer technischen Anlage sprachlich eingegebenen Informationen eines Benutzers in maschinenlesbare Daten, bei dem durch einen Vergleich von aufgenommenen Sprachelementen mit einem vorausgewählten Teilwortschatz den Sprachelementen durch diese bestimmte maschinelle Datenelemente zugeordnet werden. Sie betrifft weiter ein System zur Spracheingabe von Informationen für eine technische Anlage.

Für den Betrieb einer technischen Anlage, insbesondere einer Kraftwerksanlage, ist eine schnelle und zuverlässige Eingabe von Informationen eines Benutzers in ein Steuer- und Informationssystem der technischen Anlage erforderlich. Für die Weiterverarbeitung in Steuer- oder Regelprozessen müssen die eingegebenen Informationen in maschinenverarbeitbare Daten, beispielsweise Codes oder Rechnerbefehle, umgewandelt werden. Insbesondere in der Leittechnik einer Kraftwerksanlage erfolgt eine derartige Informationseingabe üblicherweise über eine Tastatur oder mausunterstützt über einen Bildschirm eines Computers. Eine derartige Informationseingabe ist jedoch zeitaufwendig, insbesondere im Vergleich mit gesprochenen Informationen.

Eine schnellere Eingabe von Informationen kann mittels Spracherkennersystemen erfolgen. Dabei werden sprachlich eingegebene Informationen eines Benutzers in maschinenlesbare Daten umgesetzt, indem aufgenommene Sprachelemente mit einem Wortschatz verglichen und anhand dieses Vergleichs maschinell identifiziert werden, wobei den identifizierten Sprachelementen maschinelle Datenelemente zugeordnet werden. Übliche Spracherkenner ordnen eine erkannte Lautfolge einer Liste von Namen von Bedienelementen zu und wählen das wahrscheinlichste Listendokument aus. Bei herkömmlichen Spracherkennersystemen nimmt jedoch die Erkennungsrate der Sprachelemente und somit die Zuverlässigkeit der Spracherkennung mit zunehmender Größe des Wortschatzes stark ab. Bei komplexen Wortschätzen, wie sie insbesondere beim Betrieb einer technischen Anlage oder einer Kraftwerksanlage anfallen, sind herkömmliche Spracherkenner daher unzuverlässig und somit nicht einsetzbar. Um die Erkennungsrate eines Spracherkenners zu erhöhen, muß der zugrundeliegende Wortschatz, zum Beispiel im Hinblick auf die Anzahl der enthaltenen Wörter, eingeschränkt werden. Dies schränkt jedoch die Flexibilität eines derartigen Spracheingabesystems ein.

Ein System und ein Verfahren zur Spracheingabe von Informationen, bei dem der zugrundeliegende Wortschatz in eine Anzahl von Teilwortschätzen gegliedert ist, ist aus der DE-A-42 16 455 bekannt. Die Auswahl des Teilwortschatzes erfolgt dabei mittels eines sprachlich eingegebenen Identifizierungscodes. Eine derartige Vorauswahl ist jedoch zeitaufwendig und, insbesondere in Notfallsituationen, nur eingeschränkt zuverlässig, da der Identifizierungscode mit hoher sprachlicher Genauigkeit einzugeben ist.

Der Erfindung liegt daher die Aufgabe zugrunde, ein Verfahren der obengenannten Art zur Umwandlung von sprachlich eingegebenen Informationen eines Benutzers in ein Steuer- und Informationssystem einer technischen Anlage in maschinenlesbare Daten anzugeben, das bei einem komplexen zugrundeliegenden Wortschatz bei hoher Eingabegeschwindigkeit eine hohe Zuverlässigkeit gewährleistet. Dies soll mit einem besonders geeigneten System zur Spracheingabe von Informationen für eine technische Anlage erreicht werden.

Bezüglich des Verfahrens wird diese Aufgabe erfindungsgemäß gelöst, indem die Vorauswahl des Teilwortschatzes anhand der räumlichen Position des Benutzers und/oder anhand der Gestik des Benutzers und/oder anhand der Blickrichtung des Benutzers und/oder anhand der Sprechrichtung des Benutzers erfolgt.

Die Erfindung geht dabei von der Überlegung aus, daß bei einer Aufteilung eines für eine technische Anlage relevanten Wortschatzes in Teilwortschätze einer der Teilwortschätze vorausgewählt werden kann. Auf der Grundlage des ausgewählten Teilwortschatzes können dann aufgenommene Sprachelemente mit Elementen des Teilwortschatzes, insbesondere mit Wörtern oder Wortbestandteilen, verglichen und somit identifiziert werden. Durch die Auswahl eines Teilwortschatzes wird die Komplexität des zugrundeliegenden Wortschatzes erst während der Spracheingabe reduziert, so daß auch bei einem komplexen zugrundeliegenden Wortschatz eine hohe Erkennungsrate gewährleistet ist. Weiterhin ausgehend von der Überlegung, daß bei einer räumlich ausgedehnten Leitwarte einer Kraftwerksanlage konzeptionell zusammenhängende Anzeigeinstrumente und Bedienelemente eines Teilsystems der technischen Anlage örtlich zusammengruppiert angeordnet sind, kann bereits durch die räumliche Position des Benutzers das zu bedienende Teilsystem identifiziert und somit der diesem Teilsystem zugeordnete Teilwortschatz ausgewählt werden, wobei sich der Benutzer zur Bedienung dieses Teilsystems in dessen Nähe aufhält.

Durch die Vorauswahl des Teilwortschatzes anhand der Gestik wird dem Benutzer beispielsweise ermöglicht, durch Deuten auf ein Teilsystem der technischen Anlage, beispielsweise durch eine Armbewegung, das zu bedienende Teilsystem zu identifizieren.

Ausgehend von der Beobachtung, daß konzeptionell zusammenhängende Anzeigeinstrumente und Bedienelemente eines zu bedienenden Teilsystems der technischen Anlage üblicherweise in einem gemeinsamen Blickbereich des Benutzers angeordnet sind, kann zudem durch die Ermittlung der Blickrichtung des Benutzers das zu bedienende Teilsystem frühzeitig erkannt und auf dieser Grundlage eine zutreffende Auswahl des Teilwortschatzes erreicht werden.

Bezüglich des Systems zur Spracheingabe von Informationen für eine technische Anlage, bei dem ein Sprachdetektor zur Aufnahme von Sprachelementen eines Benutzers und ein Spracherkennermodul zur Zuordnung von maschinenlesbaren Datenelementen zu Sprachelementen vorgesehen sind, wobei das Spracherkennermodul einen Analysebaustein zur Vorauswahl eines Teilwortschatzes aus einem im Spracherkennermodul hinterlegten Wortschatz aufweist, wird die Aufgabe erfindungsgemäß gelöst durch ein Beobachtungsinstrument zur Beobachtung des Benutzers.

Von dem Sprachdetektor aufgenommene Sprachelemente eines Benutzers werden an das Spracherkennermodul weitergeleitet. Durch den Analysebaustein des Spracherkennermoduls erfolgt eine Vorauswahl eines Teilwortschatzes aus einem im Spracherkennermodul hinterlegten Wortschatz anhand von von dem Beobachtungsinstrument ermittelten Daten über dem Benutzers. Durch Vergleich der aufgenommenen Sprachelemente mit dem somit ausgewählten Teilwortschatz werden den Sprachelementen maschinelle Datenelemente zugeordnet, wobei eine hohe Zuverlässigkeit der Spracherkennung durch Reduktion des Gesamtwortschatzes auf den Teilwortschatz gewährleistet ist.

Zur Auswahl von für die technische Anlage relevanten Schlüsselsprachelementen aus allen aufgenommenen Sprachelementen weist das Spracherkennermodul zweckmäßigerweise einen Filterbaustein auf.

In vorteilhafter Ausgestaltung ist das Beobachtungsinstrument ein Positionsmelder zur Ermittlung der räumlichen Position des Benutzers. Anhand der mittels des Positionsmelders ermittelten Position des Benutzers kann ein zu bedienendes Teilsystem der technischen Anlage identifiziert und ein diesem Teilsystem zugeordneter Teilwortschatz ausgewählt werden.

Gemäß einer zweckmäßigen Weiterbildung ist das Beobachtungsinstrument zur Ermittlung der Blickrichtung oder der Gestik des Benutzers vorgesehen. Anhand der dadurch ermittelbaren Blickrichtung oder Gestik des Benutzers kann ebenfalls die Identifikation eines zu bedienenden Teilsystems der technischen Anlage und somit die Auswahl des diesem zugrundeliegenden Teilwortschatzes erfolgen.

Zur Ermittlung der Sprechrichtung des Benutzers weist das Spracheingabesystem einen Detektor auf.

Die mit der Erfindung erzielten Vorteile bestehen insbesondere darin, daß durch die Auswahl eines Teilwortschatzes aus einem Gesamtwortschatz bei einem Spracheingabesystem die Zuverlässigkeit der Zuordnung von maschinellen Datenelementen zu aufgenommenen Sprachelementen auch bei einem zugrundeliegenden komplexen Gesamtwortschatz gewährleistet ist. Durch die Auswahl des Teilwortschatzes anhand von von der Spracheingabe unabhängigen Daten über den Benutzer sind ein derartiges Verfahren und ein derartiges System besonders effektiv und besonders zuverlässig.

Ein Ausführungsbeispiel der Erfindung wird anhand einer Zeichnung näher erläutert. Diese zeigt ein System 1 zur Spracheingabe von Informationen in eine Leitwarte 2 einer nicht näher dargestellten Kraftwerksanlage. An der Leitwarte 2 sind Monitore 3 zur Darstellung von Informationen und prozeßrelevanten Daten der Kraftwerksanlage angeordnet. Die Kraftwerksanlage ist organisatorisch in Teilsysteme gegliedert, denen jeweils einer der Monitore 3 zur Darstellung der sie betreffenden Informationen zugeordnet ist.

Das Spracheingabesystem 1 umfaßt einen Sprachdetektor 4 - beispielsweise ein Mikrophon - und ein Spracherkennermodul 6. Das Spracherkennermodul 6 umfaßt einen Filterbaustein 8, eine über eine Datenleitung 9 mit der Leitwarte 2 verbundene Zuordnungseinheit 10, einen Analysebaustein 12 und eine Datenbank 14. In der Datenbank 14 ist ein in mehrere Teilwortschätze TWᵢ, mit i = 1, ..., n, gegliederter Gesamtwortschatz W hinterlegt.

Ein Beobachtungsinstrument 16 ist über eine Leitung 18 mit dem Analysebaustein 12 verbunden. Das Beobachtungsinstrument 16 umfaßt einen Detektor 20 und eine Kontrolleinheit 22. Der Detektor 20 ist zweckmäßigerweise eine Kamera. Er kann alternativ aber auch ein Mikrophonarray, ein Headtracker oder ein Eyetracker sein. Anstelle der Leitungen 9, 18 können auch Funkverbindungen oder andere Datenübertragungsmittel vorgesehen sein.

Mittels der Kamera 20 wird die durch den Pfeil BR angedeutete Blickrichtung eines Benutzers B des Spracheingabesystems 1 durch das Kontrollsystem 22 des Beobachtungsinstruments 16 erfaßt und in einen die Blickrichtung beschreibenden Datensatz D umgewandelt. Der Datensatz D wird über die Leitung 18 an den Analysebaustein 12 übergeben. Anhand des Datensatzes D wird im Analysebaustein 12 der vom Benutzer B angeblickte Monitor 3' ermittelt und somit das zu bedienende und diesem Monitor 3' zugeordnete Teilsystem der Kraftwerksanlage identifiziert. Ein diesem Teilsystem zugrundeliegender Teilwortschatz TWᵢ wird vom Analysemodul 12 aus den Teilwortschätzen TWᵢ des in der Datenbank 14 hinterlegten Gesamtwortschatzes W ausgewählt. Der ausgewählte Teilwortschatz TWᵢ wird vom Analysemodul 12 der Vergleichseinheit 10 bereitgestellt. Mittels des Sprachdetektors 4 aufgenommene Sprachelemente Sᵢ des Benutzers B werden dem Filterbaustein 8 zugeführt. Im Filterbaustein 8 werden aus den aufgenommenen Sprachelementen Sᵢ alle relevanten Schlüsselsprachelemente ausgewählt. Die Schlüsselsprachelemente SEᵢ werden der Vergleichseinheit 10 zugeführt. Anhand des ausgewählten Teilwortschatzes TWₜ werden den ausgewählten Schlüsselsprachelementen SEᵢ maschinell verarbeitbare Datenelemente DEᵢ zugeordnet. Die Datenelemente DEᵢ, insbesondere Befehlscodes, werden über die Datenleitung 9 der Leitwarte 2 zugeführt und dort zur Steuerung oder Informationsverarbeitung der Kraftwerksanlage herangezogen.

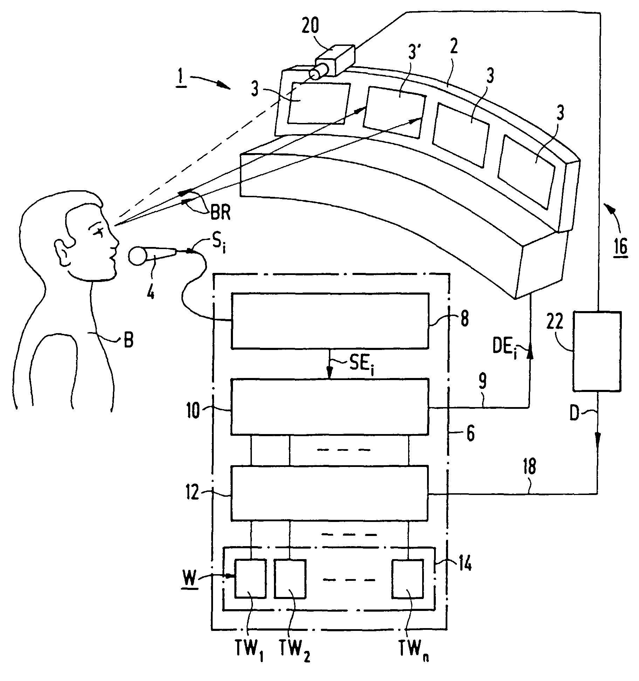

## Patentansprüche

1. Verfahren zur Umwandlung von in ein Steuer- und Informationssystem (2) einer technischen Anlage sprachlich eingegebenen Informationen eines Benutzers (B) in maschinenlesbare Daten, wobei durch einen Vergleich von aufgenommenen Sprachelementen (Sᵢ) mit einem vorausgewählten Teilwortschatz (TWᵢ) den Sprachelementen (Sᵢ) durch diese bestimmte maschinelle Datenelemente (DEi) zugeordnet werden,
**dadurch gekennzeichnet**, daß eine Vorauswahl des Teilwortschatzes (TWᵢ) aus einem hinterlegten Gesamtwortschatz (W) anhand der räumlichen Position des Benutzers (B) und/oder anhand der Gestik des Benutzers (B) und/oder anhand der Blickrichtung (BR) des Benutzers (B) und/oder anhand der Sprechrichtung des Benutzers (B) erfolgt.

2. System (1) zur Spracheingabe von Informationen für eine technische Anlage, insbesondere zur Durchführung des Verfahrens nach Anspruch 1, mit einem Sprachdetektor (4) zur Aufnahme von Sprachelementen (Sᵢ) eines Benutzers (B) und mit einem Spracherkennermodul (6) zur Zuordnung von maschinenlesbaren Datenelementen (DEᵢ) zu Sprachelementen (Sᵢ), wobei das Spracherkennermodul (6) einen Analysebaustein (12) zur Vorauswahl eines Teilwortschatzes (TWᵢ) aus einem im Spracherkennermodul (6) hinterlegten Gesamtwortschatz (W) aufweist, **gekennzeichnet durch** ein Beobachtungsinstrument (16) zur Beobachtung des Benutzers, mit dem Daten ermittelbar sind, anhand deren eine Vorauswahl des Teilwortschatzes (TWᵢ) möglich ist.

3. Spracheingabesystem nach Anspruch 2,
**dadurch gekennzeichnet**, daß das Beobachtungsinstrument ein Positionsmelder zur Ermittlung der räumlichen Position des Benutzers (B) ist.

4. Spracheingabesystem nach einem der Ansprüche 2 oder 3,
**dadurch gekennzeichnet**, daß das Beobachtungsinstrument (16) zur Ermittlung der Blickrichtung (BR) oder der Gestik des Benutzers (B) vorgesehen ist.

5. Spracheingabesystem nach einem der Ansprüche 2 bis 4,
**gekennzeichnet durch** einen Detektor zur Ermittlung der Sprechrichtung des Benutzers (B).

## Claims

1. Method for converting information of a user (B), entered by speech into a control and information system (2) of an industrial plant, into machine-readable data, where, by way of a comparison of recorded speech elements (Sᵢ) with a preselected sub-vocabulary (TWᵢ), machine data elements (DEᵢ) detected by the speech elements (Sᵢ) are allocated to the latter, characterized in that a preselection of the sub-vocabulary (TWᵢ) from a deposited total vocabulary (W) takes place with the aid of the spatial position of the user (B) and/or with the aid of the gestures of the user (B) and/or with the aid of the viewing direction (BR) of the user (B) and/or with the aid of the speaking direction of the user (B).

2. System (1) for the speech input of information for an industrial plant, in particular for carrying out the method according to claim 1, with a speech detector (4) to record speech elements (Sᵢ) of a user (B) and with a speech identifier module (6) to allocate machine-readable data elements (DEᵢ) to speech elements (Sᵢ), with the speech identifier module (6) having an analysis module (12) for the preselection of a sub-vocabulary (TWᵢ) from a total vocabulary (W) deposited in the speech identifier module (6), characterized by an observation instrument (16) for the user's observation, with which data can be detected, with the aid of which a preselection of the sub-vocabulary (TWᵢ) is possible.

3. Speech input system according to claim 2, characterized in that the observation instrument is a position indicator for detecting the spatial position of the user (B).

4. Speech input system according to one of claims 2 or 3, characterized in that the observation instrument (16) is provided for detecting the viewing direction (BR) or the gestures of the user (B).

5. Speech input system according to one of claims 2 to 4, characterized by a detector for detecting the speaking direction of the user (B).

## Revendications

1. Procédé de conversion en données assimilables par machine d'informations saisies vocalement par un utilisateur (B) dans un système (2) de commande et d'information d'une installation industrielle, suivant lequel, en comparant des éléments (Sᵢ) de parole reçus à un vocabulaire (TWᵢ) partiel présélectionné, des données (DEᵢ) machine élémentaires définies par ces éléments (Sᵢ) de parole sont associées à ces éléments (Sᵢ) de parole,
**caractérisé** en ce qu'on effectue une présélection du vocabulaire (TWᵢ) partiel dans un vocabulaire (W) global mémorisé à l'aide de la position dans l'espace de l'utilisateur (B) et/ou à l'aide des gestes de l'utilisateur (B) et/ou à l'aide de la direction (BR) du regard de l'utilisateur (B) et/ou à l'aide de la direction de la voix de l'utilisateur (B).

2. Système (1) de saisie vocale d'informations pour une installation industrielle, notamment pour la mise en oeuvre du procédé suivant la revendication 1, comportant un détecteur (4) de parole pour enregistrer des éléments (Sᵢ) de parole d'un utilisateur (B) et comportant un module (6) de reconnaissance vocale pour associer des données (DEᵢ) élémentaires assimilables par machine à des éléments (Sᵢ) de parole, le module (6) de reconnaissance vocale comprenant un composant (12) d'analyse pour présélectionner un vocabulaire (TWᵢ) partiel dans un vocabulaire (W) global mémorisé dans le module (6) de reconnaissance vocale,
**caractérisé** par un instrument (16) d'observation pour observer l'utilisateur, instrument qui permet de déterminer des données à l'aide desquelles il est possible de présélectionner le vocabulaire (TWᵢ) partiel.

3. Système de saisie vocale suivant la revendication 2, caractérisé en ce que l'instrument d'observation est un détecteur de position pour déterminer la position dans l'espace de l'utilisateur (B).

4. Système de saisie vocale suivant la revendication 2 ou 3, caractérisé en ce que l'instrument (16) d'observation est prévu pour déterminer la direction (BR) du regard ou les gestes de l'utilisateur (B).

5. Système de saisie vocale suivant l'une des revendications 2 à 4, caractérisé par un détecteur pour déterminer la direction de la voix de l'utilisateur (B).
